**Europäisches Patentamt**

**European Patent Office**

**Office européen des brevets**

(11) Veröffentlichungsnummer: **0 010 158**
**B1**

(12) **EUROPÄISCHE PATENTSCHRIFT**

(45) Veröffentlichungstag der Patentschrift:
**01.12.82**

(21) Anmeldenummer: **79103428.3**

(22) Anmeldetag: **13.09.79**

(51) Int. Cl.³: **G 21 C 19/06**, G 21 C 13/02,
B 65 D 90/66

(54) Dichtschütz zum Verschliessen der Durchfahrtsöffnungen in Trennwänden von nebeneinander angeordneten, flüssigkeitsgefüllten Lagerbecken.

(30) Priorität: **13.10.78 DE 2844621**

(43) Veröffentlichungstag der Anmeldung:
**30.04.80 Patentblatt 80/9**

(45) Bekanntmachung des Hinweises auf die Patenterteilung:
**01.12.82 Patentblatt 82/48**

(84) Benannte Vertragsstaaten:
**AT CH FR IT**

(56) Entgegenhaltungen:
**CH-A 445 661**
**FR-A-1 334 540**
**FR-A-1 493 479**
**FR-A-1 525 346**
**FR-A-2 162 071**
**FR-A-2 180 655**
**FR-A-2 279 002**
**US-A-3 049 333**

(73) Patentinhaber: **BROWN BOVERI REAKTOR GmbH,
Dudenstrasse 44, D-6800 Mannheim 1 (DE)**

(72) Erfinder: **Dose, Gerhard-Friedrich, Ing. (grad),
Goethestrasse 47, D-6941 Laudenbach (DE)**

(74) Vertreter: **Dahlmann, Gerhard, Dipl.-Ing. et al, BROWN
BOVERI REACTOR GmbH Dudenstrasse 44,
D-6800 Mannheim 1 (DE)**

## Dichtschütz zum Verschliessen der Durchfahrtsöffnungen in Trennwänden von nebeneinander angeordneten, flüssigkeitsgefüllten Lagerbecken.

Die Erfindung betrifft einen Dichtschütz zum Verschliessen der Durchfahrtsöffnungen in Trennwänden von nebeneinander angeordneten, flüssigkeitsgefüllten Lagerbecken, die insbesondere zur Lagerung von Kernreaktorbrennelementen dienen, wobei der Dichtschütz mit auswechselbaren Dichtungen versehen ist.

Kernreaktorbrennelemente werden zum Zwecke der Abschirmung in wassergefüllten Lagerbecken mit ca. zwölf Meter Wassertiefe aufbewahrt. Diese Lagerbecken sind von benachbarten Becken durch Betonwände getrennt, die Durchfahrtsöffnungen besitzen, um die Brennelemente unter Wasser transportieren zu können. Um einzelne Becken z.B. zum Trockenlegen abzusperren, werden die Öffnungen mit Dichtschützen verschlossen. Dabei müssen diese einem einseitigen Druck von ca. zehn Meter Wasserhöhe standhalten. Zur Erzielung der notwendigen Dichtigkeit werden Dichtungen verwendet, die in bestimmten Zeitabständen gewartet und erneuert werden müssen.

Es ist allgemein bekannt, die Dichtschütze einstückig auszubilden und zum Öffnen der Durchfahrtsöffnungen bzw. zum Auswechseln der Dichtungen mittels eines Hebezeugs nach oben herauszuziehen.

Wegen der grossen Wassertiefen der Becken und des hohen Gewichtes der einstückigen Dichtschütze können bei einem unterstellten Absturz des Dichtschützes während seiner vertikalen Bewegung bei Wartungsarbeiten oder beim Austausch grosse Schäden am Lagergut oder am Lagerbecken selbst auftreten.

Die Erfindung stellt sich daher die Aufgabe, beim Öffnen und Schliessen des Dichtschützes sowie bei Wartungsarbeiten ein Abstürzen des Schützes zu vermeiden und die Auswechselbarkeit der Dichtungen zu erleichtern.

Gelöst wird die Aufgabe erfindungsgemäss dadurch, dass der Dichtschütz aus zwei Dichtrahmen und zwei zwischen den Dichtrahmen angeordneten Dichtplatten besteht, dass die Dichtrahmen an ihrer zu den Dichtplatten hingewandten Seite Dichtungen tragen, dass je ein Dichtrahmen unter Zwischenfügung einer Dichtung mit der Trennwand lösbar verbunden ist und dass die Dichtplatten mittels Antriebselementen horizontal verschiebbar sind.

Der Vorteil dieser Lösung besteht darin, dass zur Wartung der Dichtungen nur die Dichtplatten herauszunehmen sind. Ausserdem ist aufgrund der horizontalen Bewegung der Dichtplatten beim Öffnen und Schliessen ein Absturz dieser schweren Bauteile in das Lagerbecken oder auf das darin befindliche Lagergut ausgeschlossen.

Weitere vorteilhafte Ausgestaltungen des erfindungsgemässen Dichtschützes sind in den Unteransprüchen angegeben.

Eine dieser vorteilhaften Ausgestaltungen verwendet zum Bewegen der Dichtplatten einen Kniehebelmechanismus, wie er an sich aus der Fig. 1 der FR-A-2 180 655 bekannt ist. Zwar werden dort mit einem ähnlichen Mechanismus bei einer Absperreinrichtung für Rohrleitungen die Ventilplatten zum Ventilsitz hin und von demselben wegbewegt. Damit soll das Ziel verfolgt werden, bei gleichbleibender Öffnungsbewegung durch den Antrieb zunächst schnell eine vorbestimmte Teilmenge des Mediums freizugeben und erst nach einer Zeit die Vollöffnung des Durchflusses einzuleiten.

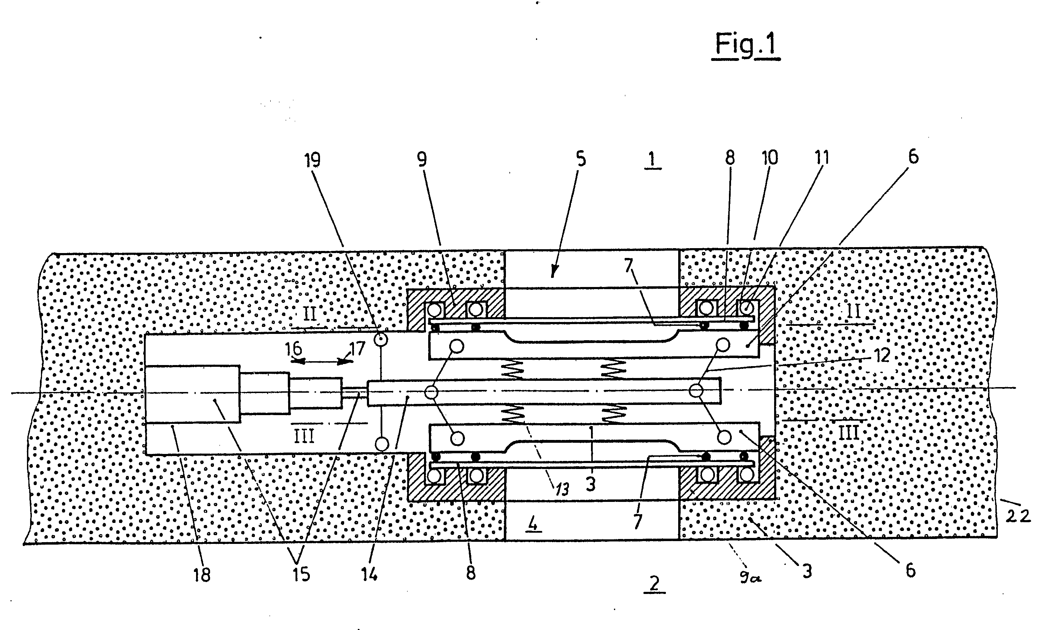

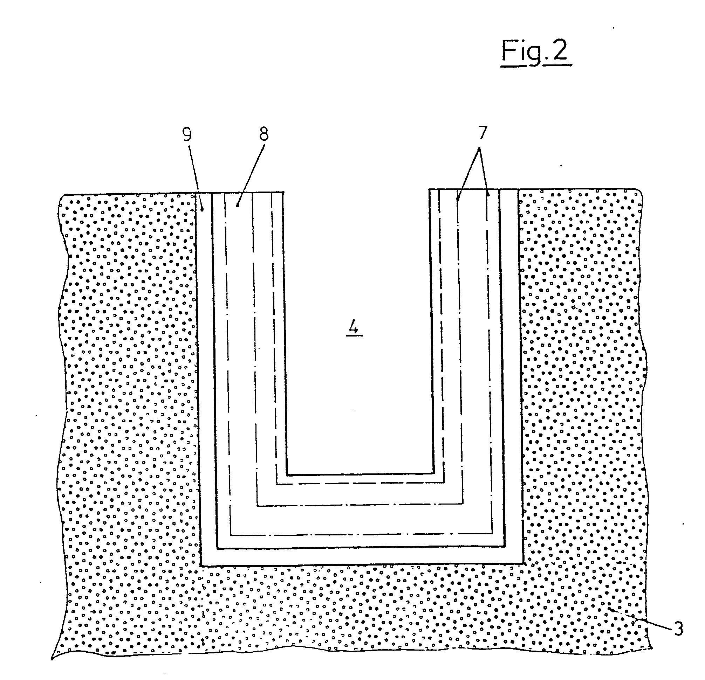

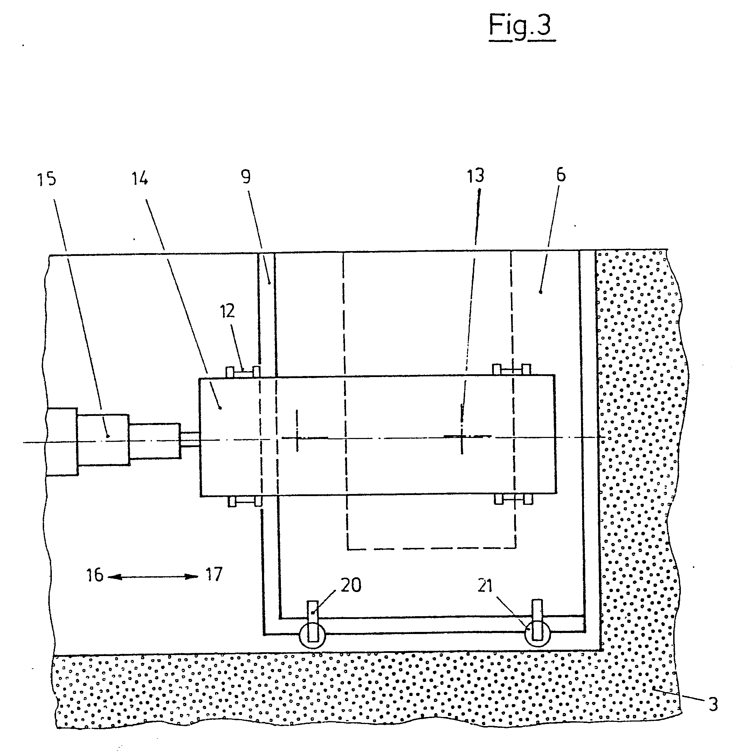

Ein Ausführungsbeispiel des erfindungsgemässen Dichtschützes wird anhand der schematischen Zeichnungen Fig. 1 bis 3 beschrieben.

Es zeigen:

Fig. 1 den Querschnitt einer Trennwand mit dem erfindungsgemässen Dichtschütz.

Fig. 2 einen Schnitt entlang der Linie II–II der Fig. 1 und

Fig. 3 einen Schnitt entlang der Linie III–III der Fig. 1.

Zwei nebeneinander angeordnete Lagerbecken 1, 2 zur Aufnahme von Kernreaktorbrennelementen weisen eine Trennwand 3 auf, die mit einer Durchfahrtsöffnung 4 versehen ist. Die Lagerbecken sind bei geschlossener Durchfahrtsöffnung 4 abwechselnd mit Wasser gefüllt bzw. trockengelegt. Bei geöffneter Durchfahrtsöffnung sind beide Lagerbecken wassergefüllt, so dass die Kernreaktorbrennelemente unterhalb des Wasserspiegels von einem Lagerbecken ins andere transportiert werden können.

Der Dichtschütz 5 zum Öffnen und Schliessen dieser Durchfahrtsöffnung 4 besteht erfindungsgemäss aus zwei Dichtplatten 6, die gegen jeweils einen mit Dichtungen 7 ausgestatteten, dem U-förmigen Querschnitt der Durchfahrtsöffnung 4 angepassten Dichtrahmen 8 gedrückt sind. Der Dichtrahmen 8 ist an einer im Beton der Trennwand 3 verankerten Platte 9, 9a lösbar befestigt. In die Platte 9, 9a sind Nuten 10 eingearbeitet, die zur Aufnahme von Dichtungen 11 dienen, welche vorzugsweise als aufblasbare Dichtungen ausgebildet sind. Die Dichtplatten 6 sind mittels Kniehebel 12 und Zugfedern 13 mit einer kombinierten Zug/Druckstange 14 verbunden, die in ihrer Verlängerung als Teleskopiereinrichtung 15 ausgebildet ist. Ein nicht dargestellter Antrieb bewegt die Teleskopiereinrichtung in Pfeilrichtung 16, 17, so dass auch die Zug/Druckstange mit den daran angelenkten Dichtplatten 6 bewegt wird. Bewegt sich die Teleskopiereinrichtung 15 in Pfeilrichtung 16, so werden die Kniehebel 12 entlastet und die Dichtplatten 6 mit Unterstützung der Zugfedern 13 von den Dichtrahmen 8 abgehoben. Die Dichtplatten können dadurch ungehindert soweit in die Aussparung 18 hineingezogen werden, bis die Durchfahrtsöffnung vollkommen freigegeben ist. Dazu ist es erforderlich, dass mittels Laschen 20 an der Unterseite des Dichtschützes Rollen 21 angeordnet sind, die den Dichtschütz in jeder Betriebsphase abstützen. Zur Begrenzung der Bewegung in Pfeilrichtung 17 weist die Platte 9a eine Verlängerung 22 auf, die als Anschlag ausgebildet ist. Die Zug/Druckstange wird bei ihrer Horizontalbewegung über Gleitrollen 19 in der Aussparung 15 geführt. Zum Auswechseln der Dichtungen 7 wird aufgrund der erfindungsgemässen Dichtschütz-Ausbildung lediglich der Dichtrahmen 8 ausgewechselt. Je nach den Gegebenheiten kann der Dichtrahmen sogar in seiner Position verbleiben, so dass nur die Dichtungen 7 gewechselt werden müssen. Die in den Nuten 10 angeordneten aufblasbaren Dichtungen 11 sind unterhalb des Wasserspiegels auswechselbar.

**Patentansprüche**

1. Dichtschütz zum Verschliessen der Durchfahrtsöffnungen in Trennwänden von nebeneinander angeordneten, flüssigkeitsgefüllten Lagerbecken (1, 2) zur Lagerung von Kernreaktorbrennelementen, wobei der Dichtschütz mit auswechselbaren Dichtungen versehen ist, dadurch gekennzeichnet, dass der Dichtschütz (5) aus zwei Dichtrahmen (8) und zwei zwischen den Dichtrahmen angeordneten Dichtplatten (6) besteht, dass die Dichtrahmen an ihrer zu den Dichtplatten hingewandten Seite Dichtungen (7) tragen, dass je ein Dichtrahmen unter Zwischenfügung einer Dichtung (11) mit der Trennwand (3) lösbar verbunden ist und dass die Dichtplatten mittels Antriebselementen horizontal verschiebbar sind.

2. Dichtschütz nach Anspruch 1, dadurch gekennzeichnet, dass die Dichtrahmen (8) der Querschnittsform der Durchfahrtsöffnung (4) angepasst und an in der Trennwand (3) verankerten Platten (9) befestigt sind.

3. Dichtschütz nach Anspruch 2, dadurch gekennzeichnet, dass die Platte (9) Nuten (10) zur Aufnahme der Dichtungen (11) aufweist.

4. Dichtschütz nach Anspruch 1, dadurch gekennzeichnet, dass eine Zug/Druckstange (14) über Kniehebel (12) und Zugfedern (13) mit den Dichtplatten derart verbunden ist, dass beim Öffnen des Dichtschützes die Kniehebel entlastet sind und die Zugfedern das Abheben der Dichtplatten von den Dichtrahmen unterstützen.

5. Dichtschütz nach Anspruch 4, dadurch gekennzeichnet, dass die Trennwand (3) eine derartige Aussparung (18) aufweist, dass die Zug/Druckstange (14) mit den angelenkten Dichtplatten (6) mittels einer Teleskopiereinrichtung (15) in die Aussparung (18) einfahrbar ist.

**Claims**

1. Sluice gate for sealing the passage openings in the partition walls of adjacent liquid-filled storage pools (12) for the storage of nuclear reactor fuel assemblies, where the sluice gate is fitted with replaceable seals, characterized in that the sluice gate (5) consists of two sealing frames (8) and two sealing plates (6) arranged between the sealing frames, that the two sealing frames are fitted with seals (7) on the side facing the sealing plates, that each of the two sealing frames is attached to the partition wall (3) with a seal (11) in between and that the frames may be removed from the wall, that the sealing plates may be moved in horizontal direction by means of drive elements.

2. A sluice gate acc. to claim 1, characterized in that the sealing frames (8) are adapted to the cross-sectional shape of the passage opening (4) and attached to plates (9) which are anchored in the partition wall (3).

3. A sluice gate acc. to claim 2, characterized in that the plate (9) is provided with grooves (10) to receive the seals (11).

4. A sluice gate acc. to claim 1, characterized in that a traction and pressure rod (14) is linked to the sealing plates by means of toggle levers (12) and tension springs (13) such that the toggle levers are relieved when the sluice gate is opened, with the tension springs assisting in lifting the sealing plates from the sealing frames.

5. A sluice gate acc. to claim 4, characterized in that the partition wall (3) is provided with a recess (18) into which the traction and pressure rod (14) with the sealing plates (6) attached to it by means of hinges can be moved using a telescope device (15).

**Revendications**

1. Vanne étanche pour fermer les orifices de passage dans des parois de séparation de bassins de stockage (12) remplis de liquide et disposés l'un à côté de l'autre, pour le stockage d'éléments de combustion de réacteur nucléaire, la vanne étanche étant munie de joints d'étanchéité échangeables, caractérisée en ce que la vanne étanche (5) est constituée par deux bâtis étanches (8) et deux plaques d'étanchéité (6) disposées entre les bâtis étanches, en ce que les bâtis étanches portent des joints d'étanchéité (7) sur leur côté tourné vers les plaques d'étanchéité, en ce que chaque bâti étanche est relié amoviblement à la paroi de séparation (3) en insérant intermédiairement un joint d'étanchéité (11) et en ce que les plaques d'étanchéité peuvent être déplacées horizontalement au moyen d'éléments de commande.

2. Vanne étanche selon la revendication 1, caractérisée en ce que les bâtis étanches (8) sont adaptés à la forme en section transversale de l'orifice de passage (4) et sont fixés à à des plaques (9) ancrées dans la paroi de séparation (3).

3. Vanne étanche selon la revendication 2, caractérisée en ce que la plaque (9) présente des rainures (10) pour recevoir les joints d'étanchéité (11).

4. Vanne étanche selon la revendication 1, caractérisée en ce qu'une tige de traction/compression (14) est reliée de telle manière aux plaques d'étanchéité par l'intermédiaire de leviers coudés (12) et de ressorts de traction (13) que, lors de l'ouverture de la vanne étanche, les leviers articulés sont dégagés et les ressorts de traction aident au levage des plaques d'étanchéité hors des châssis étanches.

5. Vanne étanche selon la revendication 4, caractérisée en ce que la paroi de séparation (3) comporte un orifice (18) tel que la tige de traction/compression (14), avec les plaques d'étanchéité (6) articulées, peut être rentrée dans l'orifice (18) au moyen d'un dispositif télescopique (15).

Fig.1

## Fig.2

## Fig. 3